(19) Europäisches Patentamt
European Patent Office
Office européen des brevets

(11) Publication number: 0 243 881
B1

(12) **EUROPEAN PATENT SPECIFICATION**

(45) Date of publication of the patent specification: **06.12.89**

(51) Int. Cl.⁴: **C 01 B 33/02**

(21) Application number: **87105963.0**

(22) Date of filling: **23.04.87**

(54) **Handling of by-product gases from a silicon furnace.**

(30) Priority: **29.04.86 US 856996**

(43) Date of publication of application: **04.11.87 Bulletin 87/45**

(45) Publication of the grant of the patent: **06.12.89 Bulletin 89/49**

(84) Designated Contracting States: **DE FR GB**

(56) References cited:
**EP-A-0 082 091**

**ELEKTROWÄRME INTERNATIONAL, vol. 34, no. 2, April 1976, pages B81-B84, Essen, DE; G. RATH et al.: "Erzeugung von hochprozentigem Ferrosilicium und Silicium-Metall im Elektroreduktionsofen"**
**JOURNAL DU FOUR ELECTRIQUE, no. 3, March 1969, pages 75-81, Paris, FR; "Le dépoussiérage des fumées à l'usine électrométallurgique de la Société VALMOESA"**

(73) Proprietor: **DOW CORNING CORPORATION, P.O. Box 1767, Midland Michigan 48640 (US)**

(72) Inventor: **Dosa, Vishu Dutt, 705 Sylvan Lane, Midland Michigan (US)**
Inventor: **Oleson, John Douglas, 2401 Burlington, Midland Michigan (US)**

(74) Representative: **Sternagel, Hans- Günther, Dr., Patentanwälte Dr. Michael Hann Dr. H.- G. Sternagel Sander Aue 30, D-5060 Bergisch Gladbach 2 (DE)**

EP 0 243 881 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1989

**Description**

This invention relates to an improvement in the process for the carbothermic reduction of silicon dioxide to prepare silicon in which the by-produced gases of the process are freed of silicon monoxide and other silicon-containing materials to facilitate recovery of the energy value of the combustible by-produced gases.

Silicon is prepared by the carbothermic reduction of silicon dioxide ($SiO_2$) and carbonaceous reducing agents. The overall reduction reaction can be represented by the equation

$$SiO_2 + 2C = Si + 2CO$$

It is generally recognized that the above reaction in reality involves multiple reactions, the most significant being outlined below:

$$SiO_2 + 3C = SiC + 2CO \quad (1),$$
$$SiO_2 + C = SiO + CO \quad (2),$$
$$SiO + 2C = SiC + CO \quad (3),$$
$$2SiO_2 + SiC = 3SiO + CO \quad (4), \text{ and}$$
$$SiO + SiC = 2Si + CO \quad (5).$$

The primary gaseous by-product is carbon monoxide (CO). However, since the carbonaceous reducing agent can come from a wide range of materials including wood and other hydrocarbon containing materials, the by-produced gases may also contain other combustible constituents such as hydrogen, methane and other hydrocarbons.

Present commercial silicon furnaces are estimated to consume approximately three times the theoretical amount of energy needed to effect the reactions, supra. Approximately 50 percent or more of the energy input to the reduction process can be accounted for in the carbon content of the carbonaceous reducing agents. This energy is presently lost as gaseous by-products, mainly CO. As an example of the energy balance around a silicon furnace, the possible distribution of the energy that is supplied to a silicon furnace with a 20 megawatt (MW) electrical energy source as compared to the energy consumed or leaving the silicon furnace is as follows:

| Input | % Total Energy | Energy MW |
|---|---|---|
| Electrical energy | 47 | 20 |
| Energy value of reducing materials | 53 | 22.5 |
| Total | 100 | 42.5 |
| **Output** | | |
| Energy to effect reduction | 30 | 12.5 |
| Sensible heat in molten metal | 4 | 1.8 |
| Heat lost to cooling water | 10 | 4.4 |
| Energy value of furnace gases | 56 | 23.8 |
| Total | 100 | 42.5 |

Most silicon furnaces operate in an "open" mode in which the furnace is not sealed and air is allowed to dilute the by-produced gases. Typically, the gases finally discharged from the furnace system may be as little as 3 volume percent of the by-produced gases, the remainder being air. Recent developments in silicon furnace technology facilitate the effective sealing of the furnace to operate in a "closed" mode. Effectively sealing the furnace will allow collection of by-produced gases in an undiluted form.

From the reactions described, supra, one of the intermediates in the reduction process is silicon monoxide (SiO). At the temperatures of the reaction SiO is a gas. As the temperature of the by-produced gases leaving the silicon furnace cool to approximately 1500°C or lower, the SiO is thought to disproportionate to a mixture of silicon and $SiO_2$ The disproportionation of SiO can be represented by the reaction

$$2SiO = Si + SiO_2.$$

The silicon and $SiO_2$ so formed is a finely dispersed solid in the by-produced gas stream. It is estimated that as much as 10 to 20 percent of the silicon in the $SiO_2$ fed in present silicon furnaces is lost as gaseous SiO or as silicon and $SiO_2$ from the disproportionation of SiO. SiO will also react with oxygen to form solid $SiO_2$. The presence of SiO, silicon, or $SiO_2$ causes mechanical difficulties in schemes to recover energy. As an example of these difficulties, the possible use of the by-produced gases to operate a steam boiler could be a problem. Combustion of the by-produced gases in a steam boiler converts any silicon-containing material to $SiO_2$. It is known in the art that at combustion temperatures, $SiO_2$ can fuse into a glassy material and cause fouling of the boiler tubes. Another example of potential mechanical problems is in combustion of the by-produced gases in a gas turbine, where solid $SiO_2$ formed causes severe erosion of the high-speed, rotating turbine. Pre-cooling of the by-produced gases by conventional heat exchanger means to agglomerate the finely dispersed silicon and $SiO_2$ and subsequent solid remowal from this gas stream appears to be one solution to this problem. However, the process of cooling the gases is severely hindered by the formation of agglomerated solids on heat transfer surfaces.

G. Rath and J. Wagner describe in Elektrowärme International 34, pages B81- B84 (1976) the problems associated with the production of silicon containing dust in exhaust gases from electrical furnaces and the recovery of heat-energy therefrom. It is suggested that the dust can be removed from the exhaust gas by treatment with water, thus forming recyclable pellets. Energy can be won from the exhaust gases after such a treatment.

Herold et al. in US-A-4 450 003, disclose a process for the recovery of combustible gases from electrometallurgical furnaces. The electrometallurgical processes cited included silicon manufacture. Herold et al. go on to disclose that these gases can be used by any known process, such as providing a boiler gas to generate steam and supplying a gas turbine which is coupled to an electric generator. However, nowhere do Herold et al. disclose, via discussion or example, the presence of silicon monoxide or other silicon-containing materials in the combustible gases from a silicon furnace. Nowhere do Herold et al. disclose the potential problems associated with the presence of silicon monoxide or other silicon-containing materials in the by-produced gases, or any means to handle the problem.

The primary objective of the instant invention is to effectively remove silicon-containing materials from the by-produced gases from a silicon furnace to facilitate practical recovery of the energy value of these gases while avoiding the above-mentioned problems. A further objective is to lower the manufacturing cost of silicon by recovery of the potential energy in the by-produced gases.

What is described is an improvement in a process for the carbothermic reduction of silicon dioxide to form silicon comprising passing electrical energy into the reaction zone of a silicon furnace, feeding silicon dioxide and a solid reducing agent into the reaction zone, recovering molten silicon from the reaction zone, and handling by-produced gases from the reaction zone, characterized by

(A) operating a silicon furnace in a closed mode at a pressure at or above atmospheric pressure;

(B) simultaneously feeding and controlling the proportions of
  (i) the by-produced gases, including silicon-containing materials, from the silicon furnace and
  (ii) a liquefied hydrocarbon-containing gas to a means for contacting (i) and (ii);

(C) contacting the by-produced gases from the silicon furnace with the liquefied hydrocarbon-containing gas, to cool the by-produced gases, and to cause the silicon-containing materials to condense and to form agglomerated, solid silicon-containing material;

(D) passing the resultant stream of gases and agglomerated, solid silicon-containing material from (C) through a means to remove the agglomerated, solid silicon-containing material; and

(E) passing the stream of gases from (D), freed of solid silicon-containing material, through a means to recover energy value from the by-produced gases.

The instant invention utilizes the cooling effect of a vaporizing liquid without introducing a diluent, non-combustible material to the by-produced gases. The instant invention also utilizes the nature of finely dispersed silicon-containing materials to completely condense and to agglomerate to larger solid particles upon cooling. The combination of the these two features generates a solid-containing gas stream that can be handled by solid-gas separation techniques to yield a gas with a high potential for practical energy recovery.

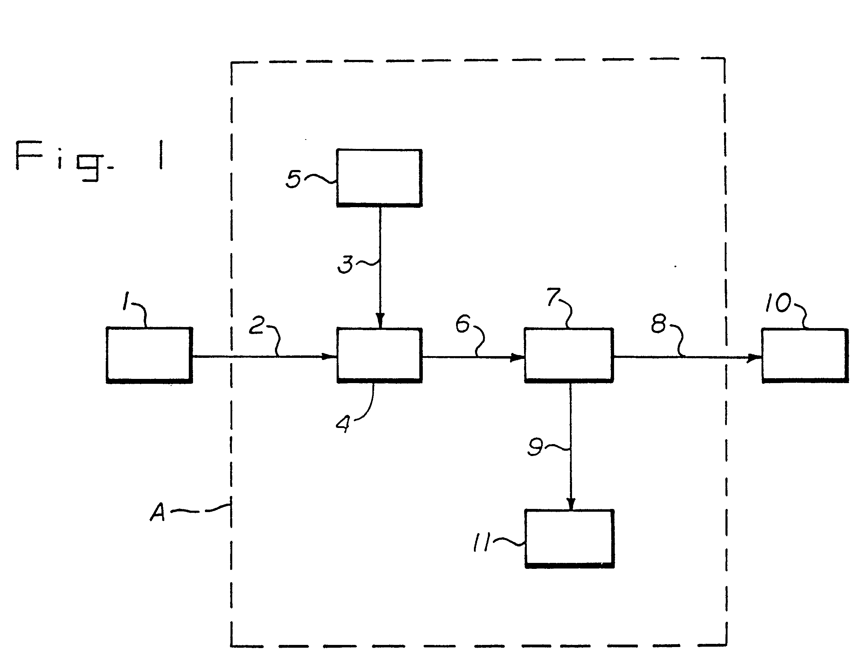

The instant invention will become better understood by those skilled in the art from a consideration of the attached drawing. Figure 1 is a schematic representation of one embodiment of the instant invention. Figure 1 is a schematic diagram outlining

(a) the contacting of the by-produced gases with a liquified hydrocarbon-containing gas;

(b) the removing of solid silicon-containing materials from the total gas stream; and

(c) the passing of the solid-free gas to energy recovery. The improvement to the process is enclosed by a box border of broken lines designated A.

In Figure 1, 1 is a representation of a silicon furnace. The silicon furnace is a closed furnace capable of being operated under pressure. The silicon furnace can be of designs and installations known in the art such as a submerged electric arc furnace or a furnace in which the electrical energy is provided by either a transferred arc plasma or a non-transferred arc plasma. The hot by-produced gas stream 2, containing gaseous silicon monoxide or finely dispersed silicon and silicon dioxide, leaves the silicon furnace at a temperature of 600°C or higher. The silicon furnace is typically operated at or above atmospheric pressure. Typically there is a sufficient driving force due to pressure within the furnace to facilitate transmission of the gas stream 2 for subsequent handling. A liquified hydrocarbon-containing gas stream 3 is fed, along with the by-produced gas stream 2 to a means 4 of contacting the by-produced gas stream 2 and the liquified hydrocarbon-containing gas stream 3. In the means 4, the liquified hydrocarbon-containing gas stream 3 vaporizes, cooling the hot by-produced gas stream 2 and causing silicon-containing materials to completely condense to a solid and to agglomerate. The means 4 of contacting streams 2 and 3 can be any known means in the art for facilitating the vaporization of a liquified gas, such as an expansion chamber. The liquified hydrocarbon-containing stream 3 is fed to means 4 of contacting streams 2 and 3 by a means 5 of feeding a liquified gas. The means 5 of feeding a liquified gas may be any conventional means such as use of the pressure in the vapor space of a liquified gas storage tank as the motive force or use of a pump suitable for handling liquified gases. The cooled stream 6, comprising the by-produced gases and solid, agglomerated silicon-containing materials, is passed through a means 7 to separate the by-produced gases from the solid, agglomerated silicon-containing materials. The means 7 to separate solid, agglomerated silicon-containing materials from the cooled stream 6 can be any conventional means of solid-gas separation such as a fabric filter bag in a baghouse. The means 7 to separate solids and gases separates cooled stream 6 into a solids-free by-produced gas stream 8 and a stream 9 of solid, agglomerated silicon-containing materials. The solids-free by-produced gas stream 8 is passed on to a means 10 of recovering the energy value of the by-product gas stream 8. This means 10 of energy recovery can be any conventional means such as combustion in a steam boiler or combustion in a gas turbine. The solid, agglomerated silicon-containing materials stream 9 is handled by a means 11 to dispose of the finely divided powder. The means 11 of disposal of the solids stream 9 can be such conventional means as dust collection and disposal or recycle of the silicon-containing material to the silicon furnace as a feed.

In accordance with the instant invention, there is provided an improvement to a process for the preparation of silicon under conditions which will be delineated herein.

The silicon furnace may be of any design known in the art. Examples of such furnace design are submerged electric arc furnaces and furnaces in which electrical energy is supplied by a transferred arc plasma or a non-transferred arc plasma. The silicon furnace, irrespective of the mode of energy input, must be operated in a sealed or "closed" mode. The use of a closed mode is necessary to eliminate the introduction of extraneous gases from the atmosphere that would dilute the energy value of the by-produced gases. The silicon furnace should be designed to operate at or above atmospheric pressure.

"By-produced gases" means the gaseous by-products of the carbothermic reduction of silicon dioxide and other gases which leave the silicon furnace. These gases can include carbon monoxide, hydrogen, hydrocarbons, water, silicon monoxide, finely dispersed silicon and silicon dioxide, and others.

For purposes of this invention, gaseous silicon monoxide and finely dispersed silicon and silicon dioxide are grouped together and defined as "silicon-containing materials."

For purposes of this invention "liquified hydrocarbon-containing gas" means natural gas, a pure hydrocarbon, or mixture of hydrocarbons that has a vapor pressure such that while it will be a liquid under pressure it will be a gas well below ambient temperatures at atmospheric pressure. "Natural gas" means the mixture of naturally-occurring hydrocarbon-containing gases that result from petroleum crude oil well or gas well operations. The liquefied hydrocarbon-containing gas used in contacting the by-produced gases from the carbothermic reduction of silicon dioxide is selected from a group which consists of liquified natural gas, methane, ethane, propane, butane, and mixtures thereof.

Feeding the by-produced gases to a means of contacting with a liquified hydrocarbon-containing gas can be effected by means of the pressure within the silicon furnace. Feeding of the by-produced gases may also be effected by conventional means such as a gas blower; such a blower needs to be of special design and materials of construction to withstand the high temperatures of the exiting by-produced gases. Feeding the liquified hydrocarbon-containing gas is effected by conventional means such as use of the pressure of the vapor space above the liquified gas in a storage tank as the motive force or the use of a pump which is suitable for pumping liquified gases. Controlling the proportions of the by-produced gas stream and the liquified hydrocarbon-containing gas can be effected by such conventional means as manual control or automatic control. The proportions of by-produced gases relative to the liquified hydrocarbon-containing gas are controlled so that the final temperature of the resultant gas and solid, agglomerated silicon-containing material stream is compatible with the materials of construction of downstream handling equipment - for ceramics and high-temperature metals a temperature less than 400°C; for fabric-type filters a temperature less than 200°C. Thus, the final temperature of the cooled by-produced gases and solid, agglomerated silicon-containing materials should be at 400°C or lower.

Contacting the by-produced gases from a silicon furnace with a liquified hydrocarbon-containing gas to vaporize the liquified natural gas, to cool the by-produced gases, and to cause the finely dispersed silicon-containing materials to form an agglomerated solid can be effected by conventional means. An example of such conventional means is an expansion chamber in which the by-produced gases and the pressurized, liquified hydrocarbon-containing gas are brought into contact, the liquified hydrocarbon-containing gas vaporizing upon release of pressure, the resultant gas mixture being cooled, and the finely dispersed silicon-containing materials being converted to an agglomerated solid.

"A means to remove the agglomerated, solid silicon-containing material" means any suitable conventional gas-solid separation device. An example of a suitable class of gas-solid separation devices is filtration. Examples of conventional filters that can be used for the instant invention are fabric medium filters, porous solid medium filters, or the like. Fabric medium filters are known in the art of filtration. An example of fabric medium filters are bag filters used in conjunction with a conventional baghouse for separating solids from large-volume process gas streams. Porous solid medium filters are also well-known in the art. Examples of porous solid medium filters are sintered metal and sintered non-metal filter elements.

The by-produced gases, freed of solids, which are composed primarily of carbon monoxide, with the remainder being composed mainly of hydrogen and hydrocarbons, have energy value as a fuel gas. A representation of a typical composition of silicon furnace gas is as follows:

| | |
|---|---|
| CO | 42 % |
| $H_2$ | 29 % |

| | |
|---|---|
| $CH_4$ | 12 % |
| Air | 2 % |
| $CO_2$ | 1 % |
| $H_2O$ | 14 %. |

This particular gas has an energy or value of approximately 2225 to 2670 kcal/$m^3$ (250 to 300 British Thermal Units (BTU)/standard cubic feet) of gas. The energy value or heating value for the above gas mixture compares to values of from 8900 to 22250 kcal/$m^3$ (1000 to 2500 BTU/standard cubic feet) of gas for natural gas and propane, respectively. Also, based upon the stoichiometric amount of carbon monoxide generated in a silicon furnace, the gas could contain as much as 20 percent by weight silicon monoxide. The by-produced gases have sufficient energy value alone as a fuel. The combination with a liquified natural gas would greatly enrich the energy value of this combined gas mixture. The energy value of the by-produced gases from a silicon furnace combined with a vaporized, liquified hydrocarbon-containing gas could be utilized in such known applications as fuel for a boiler to produce process steam. Additionally, the gas mixture could be utilized as a fuel for a gas turbine which is coupled to an electric generator. The electricity so generated could supplement much of the electricity needed for operation of the silicon furnace. Steam boilers and gas turbines to run an electric generator can be any of those means known in the art of design and installation of such means.

The preferred mode of carrying out the instant invention is to operate a closed silicon furnace. The closed furnace can be a submerged arc furnace or a furnace in which the electrical energy is provided by a transferred arc plasma or a non-transferred arc plasma.

The liquified hydrocarbon-containing gas which is vaporized and used to cool the by-produced gases from a silicon furnace is either natural gas or propane.

The proportions of the by-produced gases and the liquified hydrocarbon-containing gas should be controlled so that the temperature of the resultant gas-solid mixture is less than 400°C.

The means for removing the solid silicon-containing materials from the mixed gas stream of the by-produced gases from the silicon furnace and the vaporized liquified natural gas is a baghouse which contains bags constructed of a fabric filter medium.

The means for recovering the fuel value of the mixture of the by-product gases of a silicon furnace and the vaporized liquified natural gas is either a steam boiler or a gas turbine coupled to an electric generator.

**List of reference numbers**

| | |
|---|---|
| 1 | silicon furnace |
| 2 | gas stream (by-produced) |
| 3 | gas stream (hydrocarbon containing) |
| 4 | contacting means |
| 5 | means of feeding liquefied gas |
| 6 | cooled gas stream |
| 7 | separating means |
| 8 | gas stream (solid free by-produced) |
| 9 | gas stream (containing solids) |
| 10 | energy recovering means |
| 11 | means of disposal |



**Claims**

1. A process for the carbothermic reduction of silicon dioxide to form silicon comprising passing electrical energy into the reaction zone of a silicon furnace, feeding silicon dioxide and a solid reducing agent into the reaction zone, recovering molten silicon from the reaction zone, and handling by-produced gases from the reaction zone, characterized by

(A) operating a silicon furnace in a closed mode at a pressure at or above atmospheric pressure;

(B) simultaneously feeding and controlling the proportions of (i) the by-produced gases, including silicon-containing materials, from the silicon furnace and (ii) a liquified hydrocarbon-containing gas to a means for contacting (i) and (ii);

(C) contacting the by-produced gases from the silicon furnace with the liquified hydrocarbon-containing gas to vaporize the liquified hydrocarbon-containing gas, to cool the by-produced gases, and to cause the silicon-containing materials to condense and to form agglomerated, solid silicon-containing material;

(D) passing the resultant stream of gases and agglomerated, solid silicon-containing material from (C) through a means to remove the agglomerated, solid silicon-containing material; and

(E) passing the stream of gases from (D), freed of solid silicon-containing material, through a means to recover energy value from the by-produced gases.

2. A process according to Claim 1, wherein the liquified hydrocarbon-containing gas used in contacting the by-produced gases is selected from a group which consists of liquified natural gas, methane, ethane, propane, butane, and mixtures thereof.

3. A process according to Claim 2, wherein the liquified hydrocarbon-containing gas is propane.

4. A process according to Claim 2, wherein the liquified hydrocarbon-containing gas is natural gas.

5. A process according to Claim 1, wherein the proportions of the by-produced gases and the liquified hydrocarbon-containing gas fed to a means for contacting the by-produced gases and the liquified hydrocarbon-containing gas are controlled so that the resultant stream of gases and agglomerated, solid silicon-containing material has a final temperature of less than 400°C.

**Patentansprüche**

1. Verfahren zum Herstellen von Silizium durch thermische Reduktion von Siliziumdioxid mittels Kohlenstoff durch übertragen von elektrischer Energie in die Reaktionszone eines Siliziumschmelzofens, Einführen von Siliziumdioxid und einem festen Reduktionsmittel in die Reaktionszone, Gewinnen von geschmolzenem Silizium aus der Reaktionszone und Verwerten der Nebenproduktgase aus der Reaktionszone, *gekennzeichnet durch*,

(A) Betreiben des Siliziumschmelzofens als geschlossenes System bei Atmosphärendruck oder einem darüber liegenden Druck,

(B) gleichzeitiges Zuführen und Steuern der Anteile von (i) Nebenproduktgasen aus dem Siliziumschmelzofen, die Silizium enthaltende Stoffe aufweisen, und (ii) eines verflüssigten Kohlenwasserstoff enthaltenden Gases zu einer Einrichtung zum Inberührungbringen von (i) und (ii),

(C) Inberührungbringen der Nebenproduktgase aus dem Siliziumschmelzofen mit dem verflüssigten Kohlenwasserstoff enthaltenden Gas, um den im Gas enthaltenen verflüssigten Kohlenwasserstoff zu verdampfen und die Nebenproduktgase dadurch abzukühlen und die Silizium enthaltenden Stoffe zu kondensieren und agglomeriertes, festes Silizium enthaltendes Material auszubilden,

(D) Hindurchleiten des entstehenden Stromes aus Gasen und agglomeriertes, festes Silizium enthaltenden Materials aus (C) durch eine Einrichtung zum Entfernen des agglomeriertes, festes Silizium enthaltenden Materials und

(E) Hindurchleiten des von festes Silizium enthaltenden Materials befreiten Stromes der Gase aus (D) durch eine Einrichtung zum Zurückgewinnen der Energie aus den Nebenproduktgasen.

2. Verfahren nach Anspruch 1, *dadurch gekennzeichnet*, daß das zum in Berührungbringen mit den Nebenproduktgasen verwendete, verflüssigten Kohlenwasserstoff enthaltende Gas aus der aus verflüssigtem Erdgas, Methan, Ethan, Propan, Butan und Mischungen derselben bestehenden Gruppe ausgewählt ist.

3. Verfahren nach Anspruch 2, *dadurch gekennzeichnet*, daß das verflüssigten Kohlenwasserstoff enthaltende Gas Propan ist.

4. Verfahren nach Anspruch 2, *dadurch gekennzeichnet*, daß das verflüssigten Kohlenwasserstoff enthaltende Gas Erdgas ist.

5. Verfahren nach Anspruch 1, *dadurch gekennzeichnet*, daß die Anteile der der Einrichtung zum Inberührungbringen der Nebenproduktgase und des verflüssigten Kohlenwasserstoff enthaltenden Gases zugeführten Nebenproduktgase und des verflüssigten Kohlenwasserstoff enthaltenden Gases so gesteuert werden, daß der entstehende Strom aus Gasen und agglomeriertes, festes Silizium enthaltenden Materials eine Endtemperatur von weniger als 400°C aufweist.

**Revendications**

1. Un procédé pour la réduction carbothermique de bioxyde de silicium pour former du silicium, consistant à envoyer de l'énergie électrique dans la zone réactionnelle d'un four à silicium, à introduire du bioxyde de silicium et un agent réducteur solide dans la zone réactionnelle, à retirer du silicium fondu de la zone réactionnelle et à traiter les gaz formés comme sous-produits issus de la zone réactionnelle, caractérise en ce que:

(A) on fait fonctionner un four à silicium en mode clos à une pression égale ou supérieure à la pression atmosphèrique;

(B) on envoie, et règle simultanément les proportions de, (i) les gaz formés comme sous-produits, comprenant des matières siliciées, issus du four à silicium et (ii) un gaz hydrocarboné liquéfié, à un moyen de mise en contact de (i) et (ii);

(C) on met en contact les gaz formés comme sous-produits issus du four à silicium avec le gaz hydrocarboné liquéfié pour vaporiser le gaz hydrocarboné liquéfié, pour refroidir les gaz formés comme sous-produits et pour amener les matières siliciées à se condenser et à former une matière siliciée solide agglomérée;

(D) on fait passer le courant résultant de gaz et de matière siliciée solide agglomérée venant de (C) à travers un moyen destiné à enlever la matière siliciée solide agglomérée: et

(E) on fait passer le courant de gaz venant de (D) débarrassé de matière siliciée solide, à travers un moyen destiné à récupérer de l'énergie utile provenant des gaz formés comme sous-produits.

2. Un procédé selon la revendication 1, dans lequel le gaz hydrocarboné liquéfié utilisé dans la mise en contact des gaz formés comme sous-produits est choisi dans un groupe qui est composé par un gaz naturel, le méthane, l'éthane, le propane, le butane et leurs mélanges, à l'état liquéfié.

3. Un procédé selon la revendication 2, dans lequel le gaz hydrocarboné liquéfié est le propane.

4. Un procédé selon la revendication 2, dans lequel le gaz hydrocarboné liquéfié est du gaz naturel.

5. Un procédé selon la revendication 1, dans lequel on règle les proportions des gaz formés comme sous-produits et du gaz hydrocarboné liquéfié envoyés à un moyen de mise en contact des gaz formés comme sous-produits et du gaz hydrocarboné liquéfié, de telle manière que la température finale du courant résultant de gaz et de matière siliciée solide agglomérée soit inférieure à 400°C.

Fig. 1